Europäisches Patentamt

European Patent Office

Office européen des brevets

(11) Veröffentlichungsnummer: **0 203 911 B1**

(12) **EUROPÄISCHE PATENTSCHRIFT**

(45) Veröffentlichungstag der Patentschrift: **29.01.92**

(51) Int. Cl.⁵: **G08C 19/46**

(21) Anmeldenummer: **86890156.2**

(22) Anmeldetag: **30.05.86**

(54) **Schaltungsanordnung zur Anspeisung der über einen Drehtransformator gespeisten Erregerwicklung eines Drehmelders.**

(30) Priorität: **31.05.85 DE 3519604**

(43) Veröffentlichungstag der Anmeldung:
**03.12.86 Patentblatt 86/49**

(45) Bekanntmachung des Hinweises auf die Patenterteilung:
**29.01.92 Patentblatt 92/05**

(84) Benannte Vertragsstaaten:
**AT CH DE FR GB IT LI SE**

(56) Entgegenhaltungen:
**FR-A- 2 074 515**
**GB-A- 2 018 537**
**US-A- 2 419 550**
**US-A- 2 582 208**

(73) Patentinhaber: **Automotive Diesel Gesellschaft m.b.H.**
**Muldenstraase 5**
**A-4020 Linz(AT)**

(72) Erfinder: **Schmidt, Karl-Heinz, Dipl.-Ing.**
**Stuwerstrasse 13/2/12**
**A-1020 Wien(AT)**
Erfinder: **Seibt, Artur, Dr.-Ing.**
**Prinz Eugenstrasse 6**
**A-1040 Wien(AT)**

(74) Vertreter: **Matschnig, Franz, Dipl.-Ing.**
**Siebensterngasse 54 Postfach 452**
**A-1071 Wien(AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung bezieht sich auf eine Schaltungsanordnung zur Anspeisung der über einen Drehtransformator gespeisten Erregerwicklung eines Drehmelders und zur Auswertung der Signalspannungen seiner Signalwicklungen, wobei diese - vorzugsweise über eine Sample-and-Hold-Schaltung - mit den Eingängen eines Mikrocomputers verbunden sind, der zur Berechnung der Winkellage des Drehmelder-Rotors eingerichtet ist, sowie mit einem Wechselspannungsgenerator zur Anspeisung der Primärwicklung des Drehtransformators.

Es sind Drehmelder bekannt, die eine mit Niederfrequenz gespeiste Rotorwicklung aufweisen, welcher mehrere, meist drei, Statorwicklungen als Signalwicklungen zugeordnet sind. Aus den drei zugehörigen Signalspannungen läßt sich in eindeutiger Weise die jeweilige Winkelstellung des Rotors berechnen, ebenso wie z. B. die Winkelbeschleunigung. Zur Berechnung ist ein Mikrocomputer vorgesehen, wobei die Spannungen an den Signalwicklungen vorzugsweise über eine Sample-and-Hold-Schaltung dem Mikrocomputer zugeführt sind. Die Rotorwicklung wird über einen Drehtransformator von einem Signalgenerator angespeist. Ein derartiger Drehmelder ist z.B. in der DE-A-34 32 395 beschrieben.

Auswerteschaltungen für Drehmelder sind z.B. in der FR-A-2 074 515 oder der GB-A-2 018 537 beschrieben.

Will man kostengünstige Drehmelderkonstruktionen einsetzen, die z.B. große Luftspalte zwischen der Statorwicklung und der Signalwicklung sowie zwischen Primär- und Sekundärwicklung des Drehtransformators aufweisen, so benötigt man nicht zuletzt wegen der geringen Kreisgüte verhältnismäßig hohe Eingangsspannungen bzw. - leistungen an der Primärwicklung des Drehtransformators. Außerdem kommt es, vor allem auf Grund von Temperaturänderungen zu Änderungen der Ausgangsspannungen der Signalwicklungen, wodurch zusätzliche Meßfehler entstehen können.

Ziel der Erfindung ist die Schaffung einer Schaltungsanordnung, welche den Einsatz auch kostengünstiger und einfach aufgebauter Drehmelder erlaubt, wobei auch starke Änderungen der Umgebungstemperatur, wie sie z.B. beim Einsatz in Kraftfahrzeugen auftreten, keine zusätzlichen Meßfehler verursachen sollen.

Dieses Ziel läßt sich mit einer Schaltungsanordnung der eingangs angegebenen Art erreichen, bei welcher erfindungsgemäß vorzugsweise der Primärwicklung des Drehtransformators ein Kondensator parallelgeschaltet ist, der Wechselspannungsgenerator als Oszillator ausgebildet ist, der einen Verstärker mit einem Rückkopplungs- sowie einem Gegenkopplungszweig aufweist, wobei im Ausgangskreis des Verstärkers die Parallelschaltung der Primärwicklung des Drehtransformators mit dem Kondensator liegt und im Gegenkopplungszweig ein nichtlineares Glied angeordnet ist und der Mikrocomputer zur Abgabe eines dem jeweiligen Maximalwert der Signalspannungen proportionalen Steuersignales eingerichtet ist, wobei die Amplitude der Ausgangsspannung des Oszillators in Abhängigkeit von dem Steuersignal des Mikrocomputer einstellbar ist.

Die Konstruktion nach der Erfindung ermöglicht die Anspeisung der Rotorwicklung eines Drehmelders mit geringer Leistung auch bei höheren als sonst üblichen Frequenzen, wobei dennoch genügend große und langzeitstabile Ausgangssignale erhalten werden. Auf diese Weise ist außerdem sichergestellt, daß der Drehmelder immer mit der Resonanzfrequenz angespeist wird.

Eine besonders hohe Langzeitstabilität der Ausgangssignale erhält man, wenn im Gegenkopplungszweig des Verstärkers ein veränderbarer Widerstand vorgesehen ist, dem als Steuergröße das Differenzsignal des von dem Mikrocomputer abgegebenen Steuersignales und eines der Ausgangsamplitude des Oszillators proportionalen Signales zugeführt ist.

Wenn das Differenzsignal dem veränderbaren Widerstand über ein PI-Glied zugeführt ist, erhält man bei hoher Regelstabilität nur geringe Regelabweichungen.

Eine besonders einfache Regelung über den Gegenkopplungszweig ergibt sich, falls als veränderbarer Widerstand ein Feldeffekttransistor vorgesehen ist.

Eine einfache und kostengünstige Ausführungsform der Erfindung zeichnet sich dadurch aus, daß das Steuersignal über einen Widerstandsnetzwerk-Digital-Analog Wandler von einem digitalen Ausgangssignal des Mikrocomputers abgeleitet ist.

Bei einer Schaltungsanordnung, bei welcher die Signalwicklungen des Drehmelders über eine Sample-and-Hold-Schaltung mit dem Mikrocomputer verbunden sind, wird eine weitere Schaltungsvereinfachung dadurch ermöglicht, daß die Abtasttaktfrequenz gleich der Frequenz des Wechselspannungsgenerators gewählt ist und ein von der Wechselspannung gesteuerter Maximalwert-Detektor vorgesehen ist, dessen Ausgang mit dem Schalteingang der Sample-and-Hold-Schaltung verbunden ist.

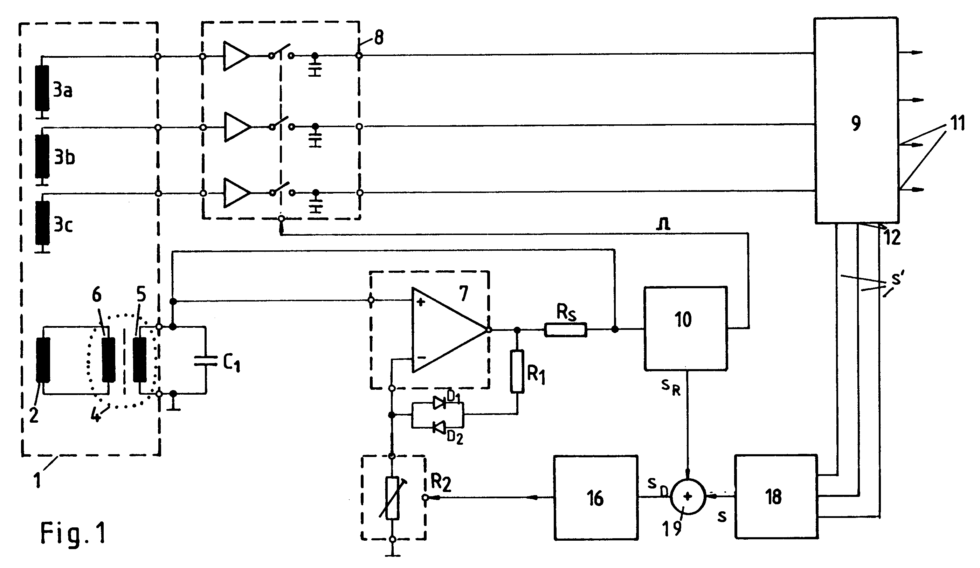

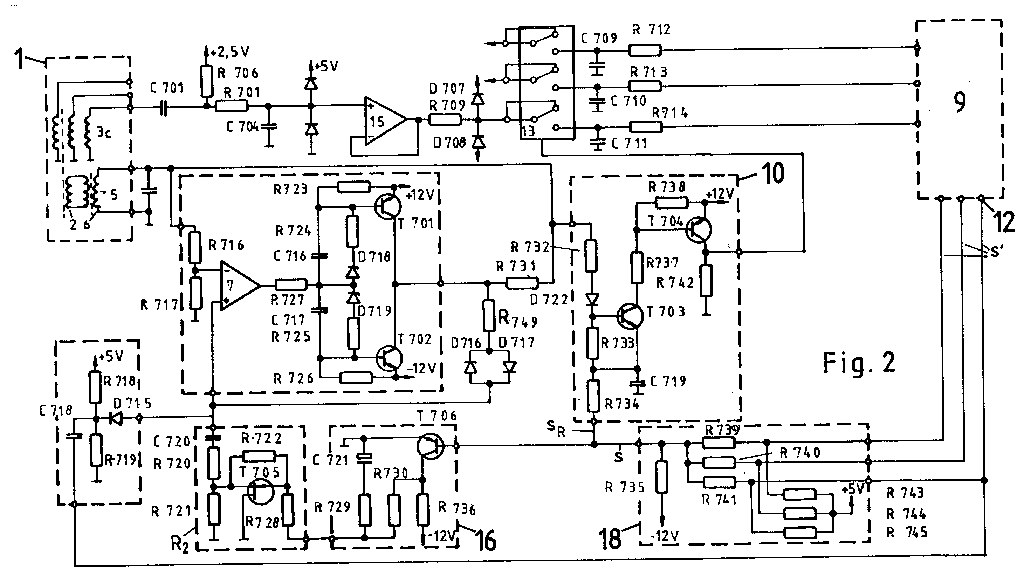

Die Erfindung samt ihren weiteren Vorteilen und Merkmalen ist im folgenden an Hand beispielsweiser Ausführungsformen näher erläutert, die in der Zeichnung veranschaulicht sind. In dieser zeigen Fig. 1 die Schaltungsanordnung nach der Erfindung in einem Prinzipschaltbild und Fig. 2 eine näher ausgeführte Schaltungsanordnung nach der Erfindung.

Nach Fig. 1 weist ein Drehmelder 1, der nur symbolisch, strichliert angedeutet ist, eine Rotorwicklung 2 auf, der drei, je um 120° versetzte Stator- bzw. Signalwicklungen 3a, 3b, 3c zugeordnet sind. Zur schleifringlosen Anspeisung dient ein Drehtransformator 4 mit einer Primärwicklung 5 und einer an die Rotorwicklung 2 angeschlossenen Sekundärwicklung 6. Parallel zur Primärwicklung 5 ist ein Kondensator $C_1$ geschaltet, welcher die an der Primärwicklung wirksame Resonanzfrequenz $f_o$ auf einen definierten und der jeweiligen Anwendung angepaßten Wert festlegt. Diese Frequenz liegt beispielsweise in der Größenordnung von 10 kHz. Es sei jedoch betont, daß zur Festlegung der gewünschten Resonanzfrequenz der Kondensator $C_1$ auch sekundärseitig gelegen sein kann bzw., zumindest theoretisch, auch durch die Wicklungskapazitäten einer Folienspule gegeben sein könnte.

Weiters ist ein Verstärker 7 vorgesehen, in dessen Ausgangskreis die Parallelschaltung Primärwicklung 5 - Kondensator $C_1$ liegt. Zur Bildung eines Rückkopplungszweiges ist der nicht an Masse liegende Anschluß der Primärwicklung 5 mit dem nicht invertierenden Eingang des Verstärkers 7 verbunden. Selbstverständlich kann die Rückkopplung in allen bekannten Variationen, z.B. induktiv, kapazitiv etc. erfolgen.

Der Verstärker 7 weist ferner einen Gegenkopplungszweig auf, der beispielsweise aus der vom Ausgang zu dem invertierenden Eingang geführten Serienschaltung eines Widerstandes $R_1$ und eines nichtlinearen Gliedes, hier zwei gegengepolte Dioden $D_1$, $D_2$ besteht. Der Grad der Gegenkopplung läßt sich mittels eines veränderbaren Widerstandes $R_2$ einstellen, der zwischen dem invertierenden Eingang des Verstärkers 7 und Masse liegt und der in weiter unten näher beschriebener Weise angesteuert wird.

Der Verstärker 7 bildet mit dem Schwingkreis, dessen Frequenz in erster Linie durch die Induktivität der Primärwicklung 5 und den Kondensator $C_1$ bestimmt ist, einen Oszillator, der bei der Frequenz $f_o$ arbeitet. Die Ausgangsamplitude kann, wie weiter unten näher beschrieben, mittels des veränderbaren Widerstandes $R_2$ eingestellt werden. Der Betrieb bei Resonanzfrequenz ermöglicht es, bei minimaler Eingangsleistung maximale Signalspannungen an den Signalwicklungen 3a, 3b, 3c zu erhalten.

Die Ausgangssignale der drei Signalwicklungen 3a, 3b, 3c werden über eine Sample-and-Hold-Schaltung 8 Eingängen eines Mikrocomputers 9 zugeführt. Als Taktfrequenz der Samplingschaltung wird im vorliegenden Fall die am Ausgang des Verstärkers 7 vorliegende Frequenz $f_o$ verwendet. Um möglichst hohe Signalspannungen an den Eingängen des Mikrocomputers 9 zu erreichen, ist ein Maximalwert-Detektor 10 mit dem Ausgang des Verstärkers 7 verbunden, der immer bei Auftreten der Maximalamplitude einen Taktimpuls an die Samplingschaltung abgibt.

Der Mikrocomputer 9 ist dazu eingerichtet, nach bekannten Methoden aus den Signalen der drei Signalwicklungen 3a, 3b, 3c die jeweilige Winkellage des Drehmelderrotors zu berechnen. Ebenso können Winkelgeschwindigkeit und Winkelbeschleunigung des Rotors berechnet werden. Die entsprechenden Werte stehen an Ausgängen 11 des Mikrocomputers 9 zur Verfügung. Der Mikrocomputer 9 weist ferner einen Ausgang 12 auf, an dem ein Steuersignal s zur Verfügung steht, das eine Funktion des Maximalwertes der Signalspannungen der Wicklungen 3a, 3b, 3c ist.

Das Steuersignal s' des Mikrocomputers 9 wird über einen Digital/Analog - Wandler 18 als Steuersignal s einer Differenzstufe 19 zugeführt, der als zweites Eingangssignal ein der Ausgangsspannung des Oszillators proportionales Signal $s_R$ des Maximalwert-Detektors 10 zugeführt ist. Das Differenzsignal $s_D$ gelangt über ein PI-Glied 16 an den Steuereingang des veränderbaren Widerstandes $R_2$.

Hiedurch wird folgendes erreicht. Wenn, etwa wegen temperaturbedingter Vergrößerung der Luftspalte im Drehmelder, die Signalspannungen absinken, wird diesem Absinken über das Differenzsignal $s_D$ durch Verminderung der Gegenkopplung des Verstärkers 7 entgegengewirkt, sodaß konstante Maximalwerte der Signalspannungen an den Eingängen des Mikrocomputers 9 gewährleistet sind.

Es ist zu erwähnen, daß der veränderbare Widerstand $R_2$ auch an anderer Stelle eines Gegenkopplungsnetzwerkes vorgesehen sein kann und dann gegebenenfalls bei größer werdendem Signal sein Widerstandswert verringert werden muß. Als veränderbarer Widerstand kann z.B. ein mittels einer Photodiode angesteuerter Photowiderstand, oder, wie nachstehend im Zusammenhang mit Fig. 2 beschrieben, ein Feldeffekttransistor Verwendung finden.

In der Schaltung nach Fig. 2 sind gleichfalls die in dem Drehmelder enthaltenen Wicklungen 2, 3a, 3b, 3c und die Wicklungen 5 und 6 des Drehtransformators 4 dargestellt, doch ist aus Gründen der Platzersparnis die Verbindung zwischen den Signalwicklungen des Drehmelders und den Eingängen eines elektronischen Schalters 13 der Sample-and-Hold-Schaltung nur für eine Wicklung 3c dargestellt. Für die beiden anderen Wicklungen 3a, 3b ist die Verbindung zum Schalter 13 identisch aufgebaut.

Der die Resonanzfrequenz $f_o$ mitbestimmende Kondensator $C_1$ ist parallel zur Primärspule 5 des Drehtransformators 4 geschaltet. Der Parallelschwingkreis liegt unter Einbeziehung eines niede-

rohmigen Serienwiderstandes $R_{731}$ im Ausgangskreis eines Verstärkers, der aus einem Operationsverstärker 14 und einer nachgeschalteten Transistor-Gegentaktstufe $T_{701}$, $T_{702}$ besteht. Die Ansteuerung der Gegentaktstufe erfolgt vom Ausgang des Verstärkers 14 über einen Widerstand $R_{727}$ über je einen Kondensator $C_{716}$, $C_{717}$ an die Basen der Transistoren $T_{701}$, $T_{702}$. Außerdem ist jede Basis über die Serienschaltung eines Widerstandes $R_{724}$ bzw. $R_{725}$ und einer Zenerdiode $D_{718}$ bzw. $D_{719}$ gegen Mitte und über einen Widerstand $R_{723}$, $R_{726}$ gegen positive bzw. negative Betriebsspannung geschaltet. Zwei vom Ausgang des Verstärkers gegen positive bzw. negative Betriebsspannung geschaltete Dioden $D_{720}$, $D_{721}$ dienen als Überspannungsschutz. Hiedurch arbeitet die Transistor-Gegentaktstufe im B-Betrieb. Die ruhestromlose Endstufe im B-Betrieb gewährleistet eine Aussteuerbarkeit bis etwa 1 Volt unter die Versorgungsspannung. So ergibt sich eine maximale Sinusamplitude an der Primärspule von 18,5 Vss bei $+-12$ Volt Versorgungsspannung über den gesamten Temperaturbereich.

Die Spannung an der Primärwicklung 5 ist über einen Spannungsteiler $R_{716}$, $R_{717}$ dem inventierenden Eingang des Operationsverstärkers 14 zugeführt, wodurch die für einen Oszillator erforderliche Rückkopplung gegeben ist.

Zur Gegenkopplung ist der Ausgang des Verstärkers über die Serienschaltung eines Widerstandes $R_{749}$ und eines nichtlinearen Gliedes, bestehend aus zwei gegenpolig parallelgeschalteten Dioden $D_{716}$, $D_{717}$ mit dem nichtinvertierenden Eingang des Operationsverstärkers 14 verbunden. Dieser Eingang ist über einen Kondensator $C_{720}$ und die Serienschaltung zweier Widerstände $R_{720}$ und $R_{721}$ gegen Masse geschaltet, wobei dem einem Widerstand $R_{721}$ die Drain-Source-Strecke eines Feldeffekttransistors $T_{705}$ parallelgeschaltet ist. Dieser Transistor $T_{705}$, dessen Gate über einen Widerstand $R_{722}$ mit dem Drainanschluß verbunden ist, arbeitet als veränderbarer Widerstand, was weiter unten noch näher beschrieben wird.

Das nicht an Masse liegende Ende der Signalwicklung 3c ist über einen Kondensator $C_{703}$ und einen Widerstand $R_{703}$ mit dem Eingang eines als Folger geschalteten Verstärkers 15 verbunden. Über den Widerstand $R_{703}$ und einen Widerstand $R_{704}$ liegt der Eingang des Verstärkers 15 an einer den Arbeitspunkt festlegenden Gleichspannung. Von dem Eingang ist noch ein Kondensator $C_{706}$ gegen Masse geschaltet (Tiefpaß $R_{703}$ - $C_{706}$). Außerdem sind an dem Eingang zwei Schutzdioden $D_{705}$, $D_{706}$ vorgesehen. Der niederohmige Ausgang des Verstärkers 15 ist über einen niederohmigen Widerstand $R_{711}$ mit einem der drei Eingänge eines elektronischen Schalters 13 verbunden, wobei auch an diesem Eingang zwei Schutzdioden $D_{711}$,

$D_{712}$ vorgesehen sind. In identischer Weise sind die Enden der Signalwicklungen 3a, 3b mit den anderen beiden Eingängen des elektronischen Schalters 13 verbunden, dessen Stromversorgung der Einfachheit halber nicht näher dargestellt ist.

Der Schalter 13 bildet einen Teil einer Sample-and-Hold-Schaltung, die in Fig. 1 als ganzes mit 8 bezeichnet ist. An den Ausgängen des Schalters 13 sind Speicherkondensatoren $C_{709}$, $C_{710}$, $C_{711}$ vorgesehen, die über Widerstände $R_{712}$, $R_{713}$, $R_{714}$ mit drei Eingängen des Mikrocomputers 9 verbunden sind. Außer den bereits im Zusammenhang mit Fig. 1 erwähnten Ausgängen 11 weist der Mikrocomputer einen 3-bit Ausgang 12 auf, an dem ein Binärsignal s' vorliegt, welches eine Funktion der Maximalspannung an den drei Signalwicklungen 3a, 3b, 3c ist.

Zur Umwandlung des Signales s' in ein Analogsignal ist ein bekanntes Widerstandsnetzwerk $R_{739}$, $R_{740}$, $R_{741}$ und $R_{743}$, $R_{744}$, $R_{745}$ vorgesehen, das als einfacher 3-bit Digital-Analog Wandler dient. Das analoge Steuersignal s ist an die Basis eines Transistors $T_{706}$ gelegt, dessen Emitter an Masse liegt und der einen Kollektorwiderstand $R_{736}$ aufweist. Der Kollektor des Transistors $T_{706}$ ist über ein PI-Glied $R_{730}$, $R_{729}$ + $C_{721}$, $R_{728}$, welches stabilisierend auf die Regelung wirkt, mit dem Gate des Feldeffekttransistors $T_{705}$ verbunden.

Der Maximalwert-Detektor 10 weist einen ersten Transistor $T_{703}$ auf, dessen Basis über die Serienschaltung eines Widerstandes $R_{732}$ und einer Diode $D_{722}$ mit dem Ausgang des Verstärkers 14, $T_{701}$, $T_{702}$ verbunden ist. Der Emitter des npn-Transistors $T_{703}$ liegt über einen Kondensator $C_{719}$ an Masse und ist mit der Basis über einen Widerstand $R_{733}$ verbunden. Der Kollektor liegt über einen Widerstand $R_{737}$ und den Basis-Emitterwiderstand eines pnp-Transistors $T_{704}$ an positiver Betriebsspannung. Der letztgenannte Transistor besitzt einen Kollektorwiderstand $R_{742}$. Der Kollektor des Transistors $T_{704}$ ist mit dem Steuereingang des elektronischen Schalters 13 verbunden.

An dem Kondensator $C_{719}$ im Emitterkreis des Transistors $T_{703}$ liegt im Betrieb eine Spannung, die der Amplitude der Oszillatorspannung am Ausgang der Gegentaktstufe $T_{701}$, $T_{702}$ proportional ist. Diese Spannung am Kondensator $C_{719}$ wird über einen Widerstand $R_{734}$ an die Basis des Transistors $T_{706}$ gelegt, an welcher auch das vom Mikrocomputer 9 stammende Steuersignal liegt.

Abgesehen von der Regelung über die Dioden $D_{716}$, $D_{717}$, die unmittelbar im Gegenkopplungszweig liegen, liegt somit eine Regelschleife mit verhältnismäßig kleiner Regelzeitkonstante vor, wobei der Sollwert dem Steuersignal s des Mikrocomputers und der Istwert der an dem Kondensator $C_{719}$ liegenden, dem Maximalwert der Oszillator-Ausgangsamplitude entsprechenden Signalspannung $s_R$ entspricht.

Am Kollektor des Transistors $T_{704}$ treten kurze Rechteckimpulse immer dann auf, wenn die Sinusspannung am Oszillatorausgang das positive Maximum pro Periode erreicht; die Folgefrequenz dieser Impulse, welche den Schalter 13 steuern, entspricht daher der Oszillatorfrequenz $f_o$.

Es ist noch zu erwähnen, daß ein Ausgang des 3-bit Ausganges 12 des Mikrocomputers 9 über einen Kondensator $C_{718}$ und über eine Diode $D_{715}$, deren Katode am Mittelpunkt eines Spannungsteilers $R_{718}$, $R_{719}$ liegt, mit dem nicht invertierenden Eingang des Operationsverstärkers 7 verbunden ist. Falls die Rauschspannung des Verstärkers mit ruhestromloser Endstufe zum Anschwingen nicht ausreicht (dies kann theoretisch bei sehr tiefen Temperaturen vorkommen), so kann der Oszillator durch Umschalten des Steuersignales und des daraus erzeugten Differenzierimpulses gestartet werden, um ein sicheres Anschwingen des Oszillators nach Inbetriebnahme der Schaltung zu ermöglichen.

**Patentansprüche**

1. Schaltungsanordnung zur Anspeisung der über einen Drehtransformator (4) gespeisten Erregerwicklung eines Drehmelders (1) und zur Auswertung der Signalspannungen seiner Signalwicklungen (3a, 3b, 3c), wobei diese - vorzugsweise über eine Sample-and-Hold-Schaltung - mit den Eingängen eines Mikrocomputers verbunden sind, der zur Berechnung der Winkellage des Drehmelder-Rotors eingerichtet ist, sowie mit einem Wechselspannungsgenerator zur Anspeisung der Primärwicklung (5) des Drehtransformators, dadurch gekennzeichnet, daß der Primärwicklung oder der Sekundärwicklung, vorzugsweise jedoch der Primärwicklung (5) des Drehtransformators (4) ein Kondensator ($C_1$) parallelgeschaltet ist, daß der Wechselspannungsgenerator als Oszillator ausgebildet ist, der einen Verstärker (7) mit einem Rückkopplungs-sowie einem Gegenkopplungszweig aufweist, wobei im Ausgangskreis des Verstärkers die Primärwicklung (5) des Drehtransformators (4) liegt und im Gegenkopplungszweig ein nichtlineares Glied ($D_1$, $D_2$) angeordnet ist und daß der Mikrocomputer (9) zur Abgabe eines dem jeweiligen Maximalwert der Signalspannungen proportionalen Steuersignales eingerichtet ist, wobei die Amplitude der Ausgangsspannung des Oszillators in Abhängigkeit von dem Steuersignal (s) des Mikrocomputers (9) einstellbar ist.

2. Schaltungsanordnung nach Anspruch 1, dadurch gekennzeichnet, daß im Gegenkopplungszweig des Verstärkers (7) ein veränderbarer Widerstand ($R_2$) vorgesehen ist, dem als Steuergröße das Differenzsignal ($s_D$) des von dem Mikrocomputer (9) abgegebenen Steuersignales (s) und eines der Ausgangsamplitude des Oszillators proportionalen Signales ($s_R$) zugeführt ist.

3. Schaltungsanordnung nach Anspruch 2, dadurch gekennzeichnet, daß das Differenzsignal ($s_D$) dem veränderbaren Widerstand ($R_2$) über ein PI-Glied (16) zugeführt ist.

4. Schaltungsanordnung nach Anspruch 2 oder 3, dadurch gekennzeichnet, daß als veränderbarer Widerstand ein Feldeffekttransistor vorgesehen ist.

5. Schaltungsanordnung nach einem der Ansprüche 2 bis 4, dadurch gekennzeichnet, daß das Steuersignal (s) über einen Widerstandsnetzwerk-Digital-Analog Wandler ($R_{739}$, $R_{740}$, $R_{741}$, $R_{744}$, $R_{745}$) von einem digitalen Ausgangssignal (s') des Mikrocomputers (9) abgeleitet ist.

6. Schaltungsanordnung nach einem der Ansprüche 1 bis 5, bei welcher die Signalwicklungen des Drehmelders über eine Sample-and-Hold-Schaltung mit dem Mikrocomputer verbunden sind, dadurch gekennzeichnet, daß die Abtasttaktfrequenz gleich der Frequenz ($f_o$) des Wechselspannungsgenerators gewählt ist und ein von der Wechselspannung gesteuerter Maximalwert-Detektor (10) vorgesehen ist, dessen Ausgang mit dem Schalteingang der Sample-and Hold-Schaltung (8) verbunden ist.

**Claims**

1. A circuit arrangement for energising the excitation winding of an angular position indicator (1) by way of a rotary transformer (4) and for evaluating the signal voltages of its signal windings (3a, 3b, 3c), the latter being connected, preferably by way of a sample-and-hold circuit, to the inputs of a microcomputer adapted to calculate the angular position of the rotor of the rotary position indicator, and comprising an a.c. voltage generator for energising the primary winding (5) of the rotary transformer, characterised in that a capacitor ($C_1$) is connected in parallel with the primary winding or the secondary winding, but preferably the primary winding (5), of the rotary transformer (4), in that the a.c.voltage generator is in the form of an oscillator comprising an amplifier (7) having a feedback branch and a negative feedback branch, the primary winding (5) of the rotary transformer (4) being situated in the output circuit of the amplifier and a non-linear network ($D_1$, $D_2$) being disposed in the negative feedback branch, and in that the microcomputer (9) is adapted to deliver a control signal proportional to the maximum value of the signal voltages at any time, the amplitude of the output voltage of the oscillator being adjustable in dependence on the control signal (s) of the microcomputer (9).

2. A circuit arrangement according to claim 1, characterised in that the negative feedback branch of the amplifier (7) contains a variable resistance ($R_2$) to which there is fed, as control variable, the differential signal ($s_D$) of the control signal (s) delivered by the microcomputer (9) and of a signal ($s_R$) proportional to the output amplitude of the oscillator.

3. A circuit arrangement according to claim 2, characterised in that the differential signal ($s_D$) is fed to the variable resistance ($R_2$) via a PI network (16).

4. A circuit arrangement according to claim 2 or 3, characterised in that the variable resistance is a field-effect transistor.

5. A circuit arrangement according to any one of claims 2 to 4, characterised in that the control signal (s) is derived from a digital output signal (s') of the microcomputer (9) via a resistance network digital-analog converter ($R_{739}$, $R_{740}$, $R_{741}$, $R_{744}$, $R_{745}$).

6. A circuit arrangement according to any one of claims 1 to 5, in which the signal windings of the rotary position indicator are connected to the microcomputer via a sample-and-hold circuit, characterised in that the sampling frequency is selected to be equal to the frequency ($f_o$) of the a.c. voltage generator and a maximum value detector (10) controlled by the AC voltage is provided, its output being connected to the switching input of the sample-and-hold circuit (8).

**Revendications**

1. Montage pour alimenter l'enroulement d'excitation, alimenté par l'intermédiaire d'un transformateur rotatif (4), d'un résolveur (1) et pour évaluer les tensions de signal de ses enroulements (3a,3b,3c) de transmission de signal, qui sont raccordées -de préférence par l'intermédiaire d'un circuit échantillonneur et bloqueur- aux entrées d'un micro-ordinateur, qui est agencé de manière à calculer la position angulaire du rotor du résolveur, ainsi qu'un générateur de tension alternative servant à alimenter l'enroulement primaire (5) du transformateur rotatif, caractérisé en ce qu'un condensateur ($C_1$) est branché en parallèle avec l'enroulement primaire ou avec l'enroulement secondaire, mais de préférence avec l'enroulement primaire (5) du transformateur rotatif (4), que le générateur de tension alternative est réalisé sous la forme d'un oscillateur, qui possède un amplificateur (7) comportant une branche de réaction et une branche de contre-réaction, l'enroulement primaire (5) du transformateur rotatif (4) étant situé dans le circuit de sortie de l'amplificateur, et un circuit non linéaire ($D_1$, $D_2$) étant disposé dans la branche de contre-réaction, et que le micro-ordinateur (9) est agencé de manière à délivrer un signal de commande proportionnel à la valeur maximum respective des tensions de signal, l'amplitude de la tension de sortie de l'oscillateur étant réglable en fonction du signal de commande (s) du micro-ordinateur (9).

2. Montage suivant la revendication 1, caractérisé par le fait que dans la branche de contre-réaction de l'amplificateur (7) est prévue une résistance variable ($R_2$), à laquelle est envoyé, en tant que grandeur de commande, le signal de différence ($s_D$) formé par la différence entre le signal de commande (s) délivré par le micro-ordinateur (9) et un signal ($S_R$) proportionnel à l'amplitude de sortie de l'oscillateur.

3. Montage suivant la revendication 2, caractérisé par le fait que le signal de différence ($S_D$) est envoyé à la résistance variable ($R_2$) par l'intermédiaire d'un circuit à action proportionnelle et intégrale (16).

4. Montage selon la revendication 2 ou 3, caractérisé en ce que le transistor à effet de champ est prévu en tant que résistance variable.

5. Montage selon l'une des revendications 2 à 4, caractérisé en ce que le signal de commande (s) est dérivé d'un signal de sortie numérique (s') du micro-ordinateur (9), par l'intermédiaire à un convertisseur numérique/analogique réseau de résistances ($R_{739}$, $R_{740}$, $R_{741}$, $R_{744}$, $R_{745}$).

6. Montage selon l'une des revendications 1 à 5, dans lequel les enroulements de transmission de signaux du résolveur sont raccordés par l'intermédiaire d'un circuit échantillonneur et bloqueur au micro-ordinateur, caractérisé en ce que la fréquence de la cadence d'exploration est choisie égale à la fréquence ($f_o$) du générateur de tension alternative et qu'il est prévu un détecteur de valeur maximale (10), qui est commandé par la tension alternative et dont la sortie est raccordée à l'entrée de commutation du circuit échantillonneur et bloqueur (8).

Fig.1

Fig. 2